# EUROPÄISCHE PATENTSCHRIFT

(11) **EP 1 924 793 B1**
(45) Veröffentlichungstag und Bekanntmachung des Hinweises auf die Patenterteilung: **07.04.2010**
(21) Anmeldenummer: 06775166.9
(22) Anmeldetag: 01.09.2006
(51) Int. Cl.: F16K 5/06

(54) **KUGELHAHN**
BALL VALVE
ROBINET A BOISSEAU SPHERIQUE

(30) Priorität: 14.09.2005 CH 14932005
(43) Veröffentlichungstag der Anmeldung: 28.05.2008
(73) Patentinhaber: Belimo Holding AG, 8340 Hinwil (CH)
(72) Erfinder: ZAMBONIN, Urs, CH-8713 Uerikon (CH); HOBI, Reto, CH-8735 St. Gallenkappel (CH)
(74) Vertreter: Roshardt, Werner Alfred
(86) Internationale Anmeldenummer: PCT/CH2006/000473
(87) Internationale Veröffentlichungsnummer: WO 2007/030960

(56) Entgegenhaltungen:
- DE-A1- 1 804 604
- DE-A1- 3 723 542
- DE-A1- 10 312 801
- DE-B- 1 217 157
- DE-U1- 7 703 253
- DE-U1- 7 918 227
- DE-U1- 8 130 294

## Beschreibung

Die Erfindung bezieht sich auf einen Zweiwege-Kugelhahn für flüssige und/oder gasförmig strömende Medien mit einer Ventilarmatur aus zwei miteinander verbundenen Gehäuseteilen, in welcher eine Kugel mit einer Bohrung für den Mediendurchfluss und einer senkrecht zur Bohrung verlaufenden Antriebswelle drehbar gelagert ist, und koaxial zur Längsachse der Ventilarmatur beidseits der Kugel auf Stoss aneinander liegende Dichtungshalbschalen angeordnet sind, welche die Kugel umschliessen und den Totraum zwischen der Ventilarmatur und der Kugel vollständig ausfüllen, wobei die Dichtungshalbschalen in axialer Richtung je eine wenigstens dem Querschnitt der Bohrung der Kugel entsprechende stirnseitige Öffnung haben, und an den auf Stoss aneinander liegenden Ringflächen je eine halbkreisförmige radiale Öffnung für die Antriebswelle aufweisen.

In der Industrie und für die Infrastruktur von Siedlungsgebieten werden Medien in Rohrleitungen transportiert, wobei diese wechselnden Drücken und Temperaturen ausgesetzt sind. Zum Regeln der Durchflussmengen werden in den Rohrleitungen Regelorgane, insbesondere auch Kugelhähne, eingesetzt, um optimale Betriebsbedingungen und die Sicherheit der Umwelt zu gewährleisten.

Schon aus der DE 7703253 U1 ist ein als Absperr- und Regelorgan für flüssige und gasförmige strömende Medien verwendbarer Kugelhahn mit einer in einem Gehäuse angeordneten, drehbaren und durchbohrten Kugel als Verschlussstück bekannt. Die Bohrung der Kugel ist in Abhängigkeit von ihrer relativen Drehstellung im Gehäuse wahlweise mit der Ein- oder der Auslassöffnung des Gehäuses ausrichtbar oder ausser Flucht mit ihr einstellbar. Weiter weist der Kugelhahn eine in Strömungsrichtung unmittelbar vor und/oder hinter der Kugel gehäusefest angeordnete, mit der Ein- und/oder Auslass des Gehäuses ausgerichtete und kreisförmig begrenzte Regelscheibe mit der gewünschten Regelcharakteristik entsprechend bemessenen Drosselöffnungen auf.

Aus der US 4815704 ist es bekannt, in einem Kugelhahn Dichtungsringe bzw. Dichtungsschalen einzusetzen, welche den ringspaltförmigen Totraum zwischen der Kugel und der Ventilarmatur verkleinern. Dieser Totraum ist verhältnismässig gross, weil die beiden Dichtungshalbschalen in erheblichem Abstand angeordnet sind. Die Hinterspülung mit dem fliessenden Medium wird wohl etwas verkleinert, jedoch nicht verhindert. Toträume in Armaturen von Kugelhähnen, in denen ein Teil des strömenden Mediums gefangen bleiben kann, beinhalten stets die Gefahr, dass Mediumablagerungen zwischen Kugel und Ventilgehäuse kriechen, im Totvolumen faulen und das durchströmende Medium verunreinigen. Da die üblichen Totvolumen nicht unbeträchtlich sind, bildet dies ein nicht zu vernachlässigendes Gefahrenpotenzial.

Nach der DE 7918227 U1 ist eine Kugel mit einem eine Durchbohrung aufweisenden Gehäuse und einer drehbaren Absperrkugel derart gestaltet, dass eine völlig totraumfreie Lagerung der Absperrkugel ermöglicht wird. Dieser Totraum ist durch jeweils einen schalenartigen Dichtring aus Dichtungsmaterial abgefüllt. Die Dichtringe stossen am Umfang stirnseitig aneinander.

Der vorliegenden Erfindung liegt deshalb die Aufgabe zugrunde, einen Zweiwege-Kugelhahn der eingangs genannten Art zu schaffen, in welchem die Nachteile des Hinterspülens mit fliessendem Medium beseitigt sind. Weiter soll der Kugelhahn besser für verschiedene Druck- und Temperaturbereiche einsetzbar sowie verschleissfester sein.

Die Aufgabe wird erfindungsgemäss durch einen Zweiwege-Kugelhahn entsprechend den im Anspruch 1 definierten Merkmalen gelöst.

Spezielle und weiterbildende Ausführungsformen des Kugelhahns sind Gegenstand von abhängigen Patentansprüchen.

Die erfindungsgemäss auf Stoss aneinander liegenden Dichtungshalbschalen, auch nur Halbschalen genannt, sind vorzugsweise durch eine auf sie in axialer Richtung einwirkende Kraft zusammengedrückt. Die Dichtwirkung im Stossbereich der beiden Dichtungshalbschalen kann noch verbessert werden, indem
- die auf Stoss liegenden Flächen kegelstumpfförmig ausgebildet sind, und/oder
- stirnseitig im peripheren Bereich der beiden Dichtungsschalen je eine Ringnut ausgespart und ein verhältnismässig stark überstehender O-Ring eingelegt wird. Beim Zusammenschrauben der beiden Gehäuseteile werden die O-Ringe auf stufenförmig abkragende Ringflächen der Ventilarmatur gepresst und flachgedrückt. Die ausgeübte Kraft presst die Dichtungshalbschalen von beiden Seiten zusammen und macht diese im Stossbereich ausserordentlich dicht.

Selbstverständlich können im Stossbereich mit gleicher oder vergleichbarer Wirkung andere geometrische Formen als eine kegelstumpfförmige ausgebildet sein.

Nach der Erfindung liegen die Dichtungshalbschalen lediglich in einem schmalen Bereich ihrer stirnseitigen Öffnungen dichtend auf der Kugel auf, beispielsweise 1 - 2 mm breit. Zwischen diesen beiden dichtenden ringförmigen Auflageflächen haben die Dichtungshalbschalen einen geringen Abstand von der Kugel, vorzugsweise höchstens etwa 0,5 mm, insbesondere höchstens etwa 0,2 mm. Dabei wird wohl ein sehr geringer Totraum gebildet, weil z.B. das Wasser über die beidseitigen Dichtflächen allmählich hindurchkriechen kann. Das Volumen ist jedoch so klein, dass über einem vorgegebenen Grenzwert liegende Verunreinigurigen des durchströmenden Mediums ausgeschlossen sind. Insbesondere bei flüssigen Medien hat dieser schmale Spalt auch eine positive Wirkung, es wird ein Schmierfilm gebildet, welcher das Drehen der Kugel erleichtert.

Der Übergang vom ringförmigen Dichtungsbereich zum ausserordentlich schmalen Zwischenraum für einen Schmierfilm zwischen Dichtungshalbschalen und Kugel kann kontinuierlich, d.h. mit einem langsam zunehmenden und wieder abklingenden Abstand, oder stufenweise erfolgen.

Jede der beiden Dichtungshalbschalen kann zweiteilig ausgebildet sein. Nach dieser Lösung verläuft eine radiale Trennfläche im Bereich des Übergangs von der Dichtungsfläche zum Schmierfilm, wobei die beiden Teile der Dichtungshalbschalen die zusammengedrückten O-Ringe dichtend gegeneinander verspannt sind. Diese Lösung hat den Vorteil, dass bei einer verbrauchten Dichtung nicht die ganzen Kugelhalbschalen, sondern lediglich der gegen die Kugel abdichtende Teil ausgewechselt werden muss. Insbesondere bei Kugelhalbschalen aus teurem Material kann dies ein erheblicher Vorteil sein.

Vorzugsweise ist auf der Einlauf- und/oder Auslaufseite des strömenden Mediums eine Regelblende eingebaut.

Ein Kugelhahn mit einer Regelblende ist besser für verschieden Druck- und Temperaturbereiche verwendbar. Der Verschleiss der Dichtungshalbschalen für die Kugel, der sich mit der Zeit auf die Abdichtungsfähigkeit ungünstig auswirkt, kann besser ausgeglichen werden, wenn auf der Einlaufseite eine Regelblende an sich bekannter Bauart eingefügt ist, welche auch als Drosseleinrichtung wirkt. Vorzugsweise umfasst die Regelblende einen Segerring.

Für die Ausbildung der Dichtungshalbschalen wird ein gleitfähiges, abriebfestes, mechanisch stabiles Material bevorzugt, wobei beim Durchfluss eines korrosiven Mediums selbstverständlich auch Korrosionsbeständigkeit notwendig ist. Derartige Materialien sind beispielsweise Formkörper aus Polytetrafluoroethylen, kurz meist Teflon genannt, oder Formkörper aus einem stabilen, mit Polytetrafluoroethylen beschichteter Werkstoff, aus einem Polyamid oder aus einer selbstschmierenden Metalllegierung. Bei zweiteilig ausgebildeten Dichtungshalbschalen kann der gegen die Kugel dichtende Teil z.B. auch aus Kohlegraphit der innere, den Totraum füllende Teil aus Polytetrafluoroethylen bestehen.

Die Erfindung wird anhand von in der Zeichnung beschriebenen Ausführungsbeispielen, welche auch Gegenstand von abhängigen Patentansprüchen sind, näher erläutert. Es zeigen schematisch
- Fig. 1 einen Axialschnitt eines vollständig offenen Kugelhahns,
- Fig. 2 einen vollständig geschlossenen Kugelhahn gemäss Fig. 1
- Fig. 3 einen teilweise offenen Kugelhahn gemäss Fig. 1
- Fig. 4 eine teilweise aufgeschnittene perspektivische Darstellung eines offenen Kugelhahns,
- Fig. 5 einen vergrössert dargestellten Übergang einer zweiteiligen Dichtungshalbschale.

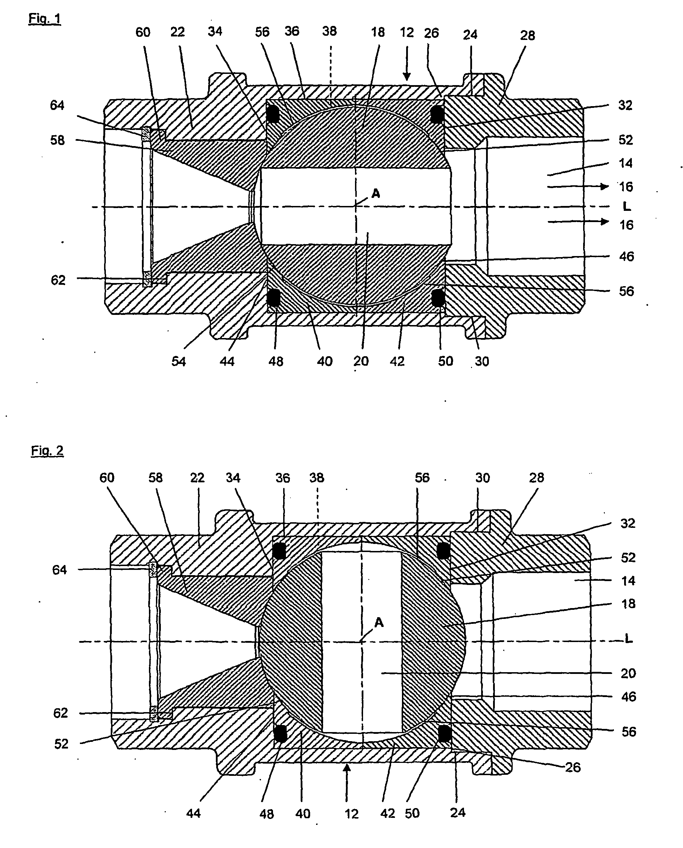

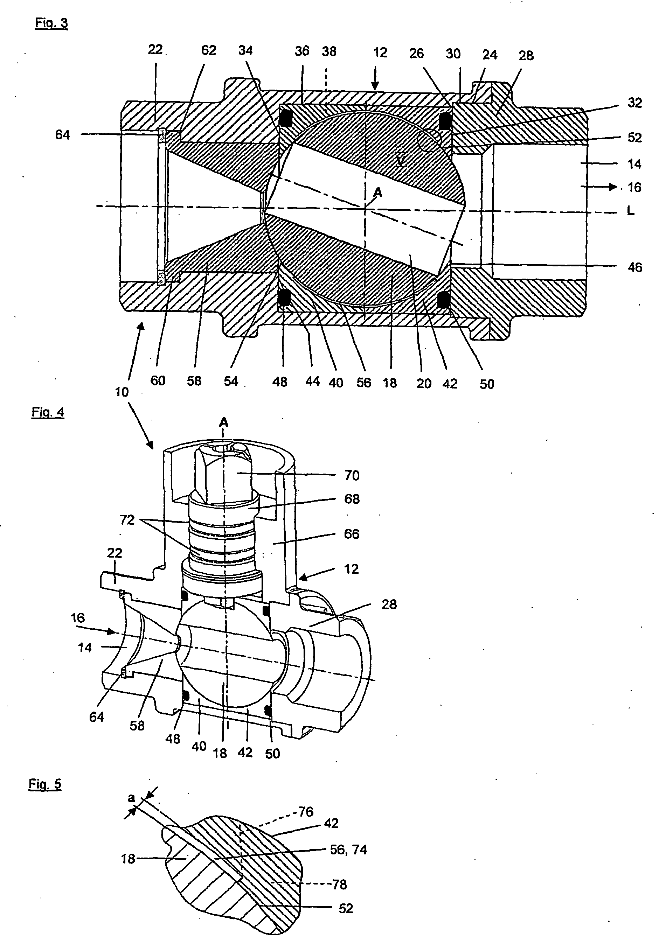

Fig. 1 zeigt einen Kugelhahn 10, welcher im wesentlichen eine Ventilarmatur 12 mit einem Durchflusskanal 14 für ein mit Pfeilen dargestelltes Medium 16 und einer Kugel 18 mit einer beidseits offenen Bohrung 20 aufweist. Diese Kugel 18 kann mit in Fig. 4 dargestellten Mitteln um eine senkrecht zur Zeichnungsebene und zur Längsachse L der Ventilarmatur 12 verlaufende Achse A gedreht werden. Die Bohrung 20 ist in Abflussöffnung vollständig offen.

Die Ventilarmatur 12 umfasst einen ersten massiven Gehäuseteil 22 mit mehreren Abstufungen und einem im Bereich der grössten Öffnung ausgebildeten stirnseitigen innengewinde 24, das durch einen stufenförmigen Anschlag 26 begrenzt ist. Ein zweiter Gehäuseteil 28 mit einem stirnseitigen Aussengewinde 30 ist bis zum Anschlag 26 eingedreht. Eine breit ausgebildete Stirnfläche 32 des zweiten Gehäuseteils 28, eine Abstufung 34 des ersten

Gehäuseteils 22 und die Innenmantelfläche 36 bilden mit der Kugel 18 einen ringspaltförmigen Totraum 38, der von zwei Dichtungshalbschalen 40, 42 vollständig ausgefüllt ist. Die beiden Gehäuseteile 22, 28 sind lösbar oder mit einem Kleber miteinander verbunden. Diese weisen auf ihrer Stirnseite 44, 46 im peripheren Bereich eine ringförmige Nut auf, in welcher ein O-Ring 48, 50 angeordnet ist. Der eingeschraubte zweite Gehäuseteil 28 drückt die überstehenden O-Ringe 48, 50 zusammen und bewirkt nicht nur eine Dichtung, sondern presst auch die beiden auf Stoss zusammenliegenden Flächen der beiden Dichtungshalbschalen 40, 42 dichtend zusammen. Diese beiden Flächen können nicht nur flach, sondern auch kegelmantelförmig und/oder abgestuft ausgebildet sein.

Die Dichtungshalbschalen 40, 42 liegen vorliegend nur im Bereich der Stirnseiten 44, 46 direkt auf der Kugel 18 auf und bilden so verhältnismässig schmale Dichtungsbereiche 52, 54. Zwischen diesen Dichtungsbereichen 52, 54 ist ein sehr schmaler, im Querschnitt sichelförmiger Ringsspalt 56 ausgebildet, welcher einfachheitshalber durch einen dicken Strich dargestellt ist. Dieser Ringsspalt 56 füllt sich durch Kapillarwirkung allmählich mit dem durchströmenden Medium 16 und bildet bei einem flüssigen Medium einen Schmierfilm, welcher das zum Drehen der Kugel um die Achse A notwendige Drehmomente herabsetzt. Die Dichtungsfunktion wird dadurch nicht beeinträchtigt.

Auf der Einströmungsseite des Kugelhahns 10 ist eine an sich bekannte, auswechselbare Regelblende 58 auswechselbar in den Durchflusskanal 14 eingesetzt, welche auf der Kugel 18 aufliegt. Nach nicht dargestellten Varianten kann separat oder zusätzlich auf der Auslaufseite eine bzw. eine weitere Regelblende angeordnet sein. Ein Kragen 60 der Regelblende 58 liegt auf einer Abstufung 62 des ersten Gehäuseteils 22 auf und wird durch einen Segerring 64 gehalten. Die Regelblende 58 erlaubt eine Reduktion des Durchflusses bei offener Stellung des Kugelhahns 10.

In Fig. 2 ist der Kugelhahn vollständig geschlossen, die Kugel ist gegenüber
Fig. 1 um 90° um die Achse A gedreht.

Der gemäss Fig. 3 teilweise geöffnete Kugelhahn reduziert die Durchflussmenge des Mediums 16 einstellbar, in Kombination mit der Regelblende 58.

In allen Position der Kugel gemäss Fig. 1 bis 3 ist ein Hinterspülen eines Totraums 38 unmöglich, weil dieser durch die beiden Dichtungshalbschalen 40, 42 vollständig ausgefüllt ist. Das Volumen des sichelförmigen Ringspalts 56 ist derart gering, dass auch beim allmählichen Eindiffundieren des Mediums 16 keine messbare Verunreinigung des durchströmenden Mediums 16 festgestellt werden kann. Bei einem flüssigen Medium 16 wirkt sich die Ausbildung eines Schmierfilms vorteilhaft aus.

Die aufgeschnittene perspektivische Ansicht gemäss Fig. 4 entspricht im wesentlichen Fig. 1. Im Bereich der Kugel 18 weist jedoch der erste massive Gehäuseteil 22 einen seitlichen Führungsstutzen 66 auf, welcher eine Antriebswelle 68 zum Drehen der Kugel 18 um die Achse A aufweist (siehe auch Fig. 1 bis 3). Im obersten Bereich ist die mit der Kugel 18 formschlüssig in Eingriff stehende Antriebswelle 68 als Vierkant 70 ausgebildet, in der Regel für einen nicht dargestellten elektrischen Steckmotor, aber auch für einen manuell betätigbaren Hebel. Die im Bereich des Führungsstutzens 66 querschnittlich rund ausgebildete Antriebswelle 68 weist zwei abdichtende O-Ringe 72 auf. Nach einer nicht dargestellten Variante kann die Abdichtung durch nachstellbare Teflonmanschetten erfolgen.

Fig. 5 zeigt den vergrösserten Bereich V von Fig. 3. Der Übergang vom Dichtungsbereich 52 zum sichelförmigen Ringspalt 56 ist vorliegend stufenförmig, kann jedoch auch kontinuierlich sein. In Folge des Kapillareffekts diffundiert z.B. Wasser durch den Dichtungsbereich 52 und bildet einen Schmierfilm 74, welcher vorliegend eine Dicke a von 0,1 mm aufweist welche dem Abstand der Dichtungshalbschalen 42 von der Kugel entspricht. Nach einer gestrichelt eingezeichneten Variante kann die Dichtungshalbschale 42 zweiteilig ausgebildet sein, ein innerer Teil 76 füllt festsitzend den weitaus grösseren Teil des Totraums 38, der äussere Teil 78 ist auswechselbar.

## Patentansprüche

1. Zweiwege-Kugelhahn (10) für flüssige und/oder gasförmig strömende Medien mit einer Ventilarmatur (12) aus zwei miteinander verbundenen Gehäuseteilen (22,28), in welcher eine Kugel (18) mit einer Bohrung (20) für den Mediendurchfluss und einer senkrecht zur Bohrung (20) verlaufenden Antriebswelle (68) drehbar gelagert ist, und koaxial zur Längsachse (L) der Ventilarmatur (12) beidseits der Kugel (18) auf Stoss aneinander liegende Dichtungshalbschalen (40, 42) angeordnet sind, welche die Kugel (18) umschliessen und einen Totraum (38) zwischen der Ventilarmatur (12) und der Kugel (18)- vorbehaltlich eines sichelförmigen Ringspalts - vollständig ausfüllen, wobei die Dichtungshalbschalen (40,42) in axialer Richtung (L) je eine wenigstens dem Querschnitt der Bohrung (20) der Kugel (18) entsprechende stirnseitige Öffnung haben, und an den auf Stoss aneinander liegenden Ringflächen je eine halbkreisförmige radiale Öffnung für die Antriebswelle (38) aufweisen,
**dadurch gekennzeichnet, dass**
die Dichtungshalbschalen (40, 42) lediglich im Bereich ihrer stirnseitigen Öffnungen auf der Kugel (18) aufliegen und dazwischen unter Bildung eines schmalen, sichelförmigen Ringspalts (56) einen geringen Abstand (a) von der Kugel haben.

2. Kugelhahn (10) nach Anspruch 1, **dadurch gekennzeichnet, dass** der Ringspalt (56) der Dichtungshalbschalen (40,42) von der Kugel (18) einen Abstand (a) von höchstens etwa 0,5 mm, insbesondere höchstens etwa 0,2 mm, hat.

3. Kugelhahn (10) nach Anspruch 1 oder 2, **dadurch gekennzeichnet, dass** der Abstand (a) der Dichtungshalbschalen (40, 42) von der Kugel (18) kontinuierlich zu- und dann wieder abnimmt.

4. Kugelhahn (10) nach einem der Ansprüche 1 bis 3, **dadurch gekennzeichnet, dass** der Übergang zum Abstand (a) der Dichtungshalbschalen (40, 42) von der Kugel (18) stufenförmig ausgebildet ist.

5. Kugelhahn (10) nach einem der Ansprüche 1 bis 4, **dadurch gekennzeichnet, dass** die Dichtungshalbschalen (40,42) in einem 1 bis 2 mm breiten Bereich auf der Kugel (18) aufliegen.

6. Kugelhahn (10) nach einem der Ansprüche 1 bis 5, **dadurch gekennzeichnet, dass** die beiden Dichtungshalbschalen (40,42) zweiteilig ausgebildet sind, vorzugsweise mit einer radialen Trennfläche zwischen dem Dichtungsbereich (52,54) und dem sichelförmigen Ringspalt (56).

7. Kugelhahn nach einem der Ansprüche 1 - 6, **dadurch gekennzeichnet, dass** auf der Einlauf- und/oder Auslaufseite des strömenden Mediums (16) eine Regelblende (58) eingebaut ist.

8. Kugelhahn (10) nach Anspruch 7, **dadurch gekennzeichnet, dass** die Regelblende (58) einen Segerring (64) umfasst.

9. Kugelhahn (10) nach einem der Ansprüche 1 bis 8, **dadurch gekennzeichnet, dass** im peripheren Bereich der Stirnseiten (44,46) der Dichtungshalbschalen (40,42) ein überstehender O-Ring (48,50) in eine entsprechende Ringnut eingelegt ist

10. Kugelhahn (10) nach einem der Ansprüche 1 bis 9, **dadurch gekennzeichnet, dass** die Dichtungshalbschalen (40,42) aus Polytetrafluoroethylen, aus einem mechanisch stabilen, mit Polytetrafluoroethylen beschichteten Werkstoff, einem Polyamid oder aus einer selbstschmierenden Metalllegierung bestehen, und der gegen die Kugel (18) dichtende äussere Teil (48) der Dichtungshalbschale(40,42) vorzugsweise aus Kohlegrafit, der innere, den Totraum (38) füllende Teil (46) vorzugsweise aus Polytetrafluoroethylen oder gesintertem Polytetrafluoroethylen besteht.

## Claims

1. Two-way ball valve (10) for liquid and/or gaseous flowing media, with a valve fitting (12) consisting of two interconnected housing parts (22, 28) in which a ball (18) with a bore (20) for the media throughflow and with a drive shaft (68) running perpendicularly with respect to the bore (20) is mounted rotatably, and in which are arranged coaxially with respect to the longitudinal axis (L) of the valve fitting (12), on both sides of the ball (18), sealing half shells (40, 42) which butt one against the other and which surround the ball (18) and completely fill - except a sickle-shaped annular gap - the dead space (38) between the valve fitting (12) and the ball (18), the sealing half shells (40, 42) having in the axial direction (L) in each case an end-face orifice corresponding at least to the cross section of the bore (20) of the ball (18), and having, on the annular surfaces butting one against the other, in each case a semicircular radial orifice for the drive shaft (38), **characterized in that** the sealing half shells (40, 42) lie on the ball (18) in the region of their end-face orifices only and are at a short distance (a) from the ball (18) so as to form a narrow sickle-shaped annular gap (56).

2. Ball valve (10) according to Claim 1, **characterized in that** the annular gap (56) of the sealing half shells (40, 42) is at a distance (a) from the ball (18) of at most about 0.5 mm, in particular of at most about 0.2 mm.

3. Ball valve (10) according to Claim 1 or 2, **characterized in that** the distance (a) of the sealing half shells (40, 42) from the ball (18) increases continuously and then decreases again.

4. Ball valve (10) according to one of Claims 1 to 3, **characterized in that** the transition to the distance (a) of the sealing half shells (40, 42) from the ball (18) is designed in step form.

5. Ball valve (10) according to one of Claims 1 to 4, **characterized in that** the sealing half shells (40, 42) lie on the ball (18) in a region with a width of 1 to 2 mm.

6. Ball valve (10) according to one of Claims 1 to 5, **characterized in that** the two sealing half shells (40, 42) are designed in two parts, preferably with a radial parting plane between the sealing region (52, 54) and the sickle-shaped annular gap (56).

7. Ball valve according to one of Claims 1 to 6, **characterized in that** a regulating diaphragm (58) is installed on the inflow and/or outflow side of the flowing medium (16).

8. Ball valve (10) according to Claim 7, **characterized in that** the regulating diaphragm (58) comprises a Seeger ring (64).

9. Ball valve (10) according to one of Claims 1 to 8, **characterized in that**, in the peripheral region of the end faces (44, 46) of the sealing half shells (40, 42), a projecting O-ring (48, 50) is inserted into a corresponding annular groove.

10. Ball valve (10) according to one of Claims 1 to 9, **characterized in that** the sealing half shells (40, 42) consist of polytetrafluoroethylene, of a mechanically stable material coated with polytetrafluoroethylene, of a polyamide or of a self-lubricating metal alloy, and the outer part (48), sealing with respect to the ball (18), of the sealing half shell (40, 42) preferably consists of carbon graphite, and the inner part (46) filling the dead space (38) preferably consists of polytetrafluoroethylene or of sintered polytetrafluoroethylene.

## Revendications

1. Vanne deux voies (10) à boisseau sphérique pour fluides liquides et/ou gazeux en écoulement, présentant un corps de vanne (12) constitué de deux parties de boîtier (22, 28) reliées l'une à l'autre et dans lequel une sphère (18) dotée d'un alésage (20) permettant le passage du fluide et d'un arbre d'entraînement (68) perpendiculaire à l'alésage (20) est montée à rotation, des demi-coquilles d'étanchéité (40, 42) placées bout-à-bout étant disposées coaxialement par rapport à l'axe longitudinal (L) du corps de vanne (12) des deux côtés de la sphère (18), entourant la sphère (18) et remplissant complètement - sauf un étroit interstice annulaire en forme de croissant - un espace vide (38) situé entre le corps de vanne (12) et la sphère (18), chacune des demi-coquilles d'étanchéité (40, 42) ayant dans la direction axiale (L) une ouverture frontale qui correspond au moins à la section transversale de l'alésage (20) de la sphère (18) et présentant sur les surfaces annulaires placées l'une contre l'autre bout-à-bout une ouverture radiale semi-circulaire pour l'arbre d'entraînement (38),
**caractérisée en ce que**
les demi-coquilles d'étanchéité (40, 42) ne reposent sur la sphère (18) que dans leur partie formant l'ouverture frontale et présentent une petite distance (a) par rapport à la sphère (18) en formant un étroit interstice annulaire (56) en forme de croissant.

2. Vanne (10) à boisseau sphérique selon la revendication 1, **caractérisée en ce que** l'interstice annulaire (56) des demi-coquilles d'étanchéité (40, 42) présente par rapport à la sphère (18) une distance (a) d'au plus environ 0,5 mm et en particulier d'au plus environ 0,2 mm.

3. Vanne (10) à boisseau sphérique selon les revendications 1 ou 2, **caractérisée en ce que** la distance (a) entre les demi-coquilles d'étanchéité (40, 42) et la sphère (18) augmente de manière progressive avant de diminuer de manière progressive.

4. Vanne (10) à boisseau sphérique selon l'une des revendications 1 à 3, **caractérisée en ce que** la transition entre la distance (a) entre les demi-coquilles d'étanchéité (40, 42) et la sphère (18) forme un gradin.

5. Vanne (10) à boisseau sphérique selon l'une des revendications 1 à 4, **caractérisée en ce que** les demi-coquilles d'étanchéité (40, 42) reposent sur la sphère (18) sur une zone d'une largeur de 1 à 2 mm.

6. Vanne (10) à boisseau sphérique selon l'une des revendications 1 à 5, **caractérisée en ce que** les deux demi-coquilles d'étanchéité (40, 42) sont configurées en deux pièces, de préférence avec une surface radiale de séparation entre la zone d'étanchéité (52, 54) et l'interstice annulaire (56) en forme de croissant.

7. Vanne à boisseau sphérique selon l'une des revendications 1 à 6, **caractérisée en ce qu'**un écran de régulation (58) est incorporé sur le côté d'entrée et/ou le côté de sortie du fluide (16) en écoulement.

8. Vanne (10) à boisseau sphérique selon la revendication 7, **caractérisée en ce que** l'écran de régulation (58) comprend un anneau de Seger (64).

9. Vanne (10) à boisseau sphérique selon l'une des revendications 1 à 8, **caractérisée en ce qu'**un joint torique (48, 50) en saillie est inséré dans une rainure annulaire correspondante ménagée dans la partie périphérique des côtés frontaux (44, 46) des demi-coquilles d'étanchéité (40, 42).

10. Vanne (10) à boisseau sphérique selon l'une des revendications 1 à 9, **caractérisée en ce que** les demi-coquilles d'étanchéité (40, 42) sont constituées de polytétrafluoroéthylène, d'un matériau mécaniquement stable recouvert de polytétrafluoroéthylène, d'un polyamide ou d'un alliage métallique autolubrifiant, et **en ce que** la partie extérieure (48) de la demi-coquille (40, 42) qui assure l'étanchéité vis-à-vis de la sphère (18) est constituée de préférence de graphite, tandis que la partie intérieure (46) qui remplit l'espace mort (38) est de préférence constituée de polytétrafluoroéthylène ou de polytétrafluoroéthylène fritté.
